(19) Europäisches Patentamt
European Patent Office
Office européen des brevets

(11) **EP 4 733 813 A1**

(12) **EUROPEAN PATENT APPLICATION**
published in accordance with Art. 153(4) EPC

(43) Date of publication:
**29.04.2026   Bulletin 2026/18**

(21) Application number: **24814580.7**

(22) Date of filing: **31.05.2024**

(51) International Patent Classification (IPC):
**G01S 19/49** (2010.01)     **G01C 21/16** (2006.01)

(52) Cooperative Patent Classification (CPC):
Y02P 60/12

(86) International application number:
**PCT/CN2024/096593**

(87) International publication number:
**WO 2024/245386 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **02.06.2023   CN 202310654603**

(71) Applicant: **Yosemite Shanghai Robotics Co., Ltd Shanghai 200233 (CN)**

(72) Inventors:
• **SU, Hans**
  **Shanghai 200233 (CN)**

• **LI, Jack**
  **Shanghai 200233 (CN)**
• **GU, Jeff**
  **Shanghai 200233 (CN)**
• **ZHAO, Xun**
  **Shanghai 200233 (CN)**
• **FAN, Wolory**
  **Shanghai 200233 (CN)**

(74) Representative: **JWP Patent & Trademark Attorneys**
**ul. Minska 75**
**03-828 Warszawa (PL)**

(54) **POSITIONING METHOD FOR MOWING ROBOT, ELECTRONIC DEVICE AND COMPUTER-READABLE STORAGE MEDIUM**

(57)   Disclosed are a method for localizing a lawnmower robot, and an electronic device and a computer-readable storage medium therefor. The method includes: determining first position information of the lawnmower robot, wherein the first position information is related to wheel speed data of the lawnmower robot; determining second position information of the lawnmower robot, wherein the second position information is related to satellite navigation data and/or inertial positioning data of the lawnmower robot; and fusing the first position information and the second position information to determine current position information of the lawnmower robot. By determining the first position information and the second position information, data sources from multiple dimensions are provided for determining the current position information of the lawnmower robot. The first position information and the second position information are fused to achieve a tight coupling therebetween. In this way, the acquired current position information of the lawnmower robot is more accurate, and hence the localization accuracy of the lawnmower robot is improved.

S101 — Determine first position information of the lawnmower robot

S102 — Determine second position information of the lawnmower robot

S103 — Fuse the first position information and the second position information to determine current position information of the lawnmower robot

FIG. 2

## Description

This application is based upon and claims priority to Chinese Patent Application No. 2023106546032, filed before China National Intellectual Property Administration on June 2, 2023 and entitled "METHOD FOR LOCALIZING LAWNMOWER ROBOT, AND ELECTRONIC DEVICE AND COMPUTER-READABLE STORAGE MEDIUM THEREFOR," the entire contents of which are incorporated herein by reference.

## TECHNICAL FIELD

Embodiments of the present disclosure relate to the technical field of lawnmower robots, and in particular, relate to a method for localizing a lawnmower robot, and an electronic device and a readable storage medium therefor.

## BACKGROUND

A lawnmower robot is an integrated robotic system that combines multiple functions such as environment perception, dynamic path planning, and behavior control, liberating users from the laborious tasks of lawn maintenance. Therefore, localization of the lawnmower robot is essential for implementing dynamic path planning for lawn maintenance operations.

Conventionally, a mobile station is used to acquire satellite positioning signals, and localization correction is performed using correction information from a real-time kinematic (RTK) base station. The mobile station is disposed on the lawnmower robot. However, factors such as signal obstruction by buildings and atmospheric interference can affect the satellite positioning signals. This may cause localization drift in the lawnmower robot, resulting in poor localization accuracy.

## SUMMARY

In view of the above, embodiments of the present disclosure provide a method for localizing a lawnmower robot, and an electronic device and a computer-readable storage medium therefor, which improve the accuracy of localization of the lawnmower robot.

In a first aspect of the embodiments of the present disclosure, a method for localizing a lawnmower robot is provided. The method includes:

determining first position information of the lawnmower robot, wherein the first position information is related to wheel speed data of the lawnmower robot;

determining second position information of the lawnmower robot, wherein the second position information is related to at least one of satellite navigation data and inertial positioning data of the lawnmower robot; and

fusing the first position information and the second position information to determine current position information of the lawnmower robot.

In the method for localizing a lawnmower robot according to the present disclosure, by determining the first position information and the second position information, data sources from multiple dimensions are provided for determining the current position information of the lawnmower robot.

Based on this, fusing the first position information and the second position information allows for a tight coupling of the first position information and the second position information. This, in turn, makes the current position information of the lawnmower robot more accurate, thereby improving the localization accuracy of the lawnmower robot and ensuring that a high degree of localization accuracy is still maintained even in a case where satellite positioning signals are disturbed.

In some embodiments, the fusing the first position information and the second position information to determine the current position information of the lawnmower robot includes:

fusing the first position information and the second position information using a Kalman filter algorithm to determine position estimate information; and

determining the position estimate information as the current position information of the lawnmower robot.

According to the above method, the first position information and the second position information are fused using the existing Kalman filter algorithm to determine the position estimate information, and then the estimate position estimate information is determined as the current position information, such that the calculation of higher-precision position information is achieved at a lower cost.

In some embodiments, the fusing the first position information and the second position information by the Kalman filter algorithm to determine the position estimate information includes:

acquiring a first covariance and a second covariance, wherein the first covariance is related to the wheel speed data, and the second covariance is related to at least one of the satellite navigation data and the inertial positioning data; determining a third covariance based on the first covariance and a covariance of position information corresponding to a previous time instant of the first position information, wherein the third covariance is a covariance of the first position information;

determining a Kalman gain based on the third covariance and the second covariance; and

determining the position estimate information based on the first position information, the second position information, and the Kalman gain.

According to the above method, the first covariance and the second covariance are acquired, and the third covariance is determined based on the first covariance and the covariance of the position information corresponding to the previous time instant of the first position information, such that the Kalman gain is determined based on the third covariance and the second covariance. According to the embodiments of the present disclosure, the Kalman filter algorithm is simplified, such that the position estimation information is determined based on first position information, the second position information, and the Kalman gain, thereby improving the computational efficiency of the fusion.

In some embodiments, the method further includes:

determining a fourth covariance based on the third covariance and the Kalman gain, wherein the fourth covariance is a covariance of position information corresponding to a subsequent time instant of the first positioning information; and storing the fourth covariance.

According to the above method, the fourth covariance is determined based on the third covariance and the Kalman gain, wherein the fourth covariance is the covariance of the position information corresponding to the subsequent time instant of the first positioning information; and the fourth covariance is stored. Consequently, the Kalman filter algorithm operates recursively to determine the current position information of the lawnmower robot in real-time.

In some embodiments, the fusing the first position information and the second position information to determine the current position information of the lawnmower robot includes:

determining a residual term based on the first position information and the second position information; constructing a cost function based on the residual term; and determining the current position information of the lawnmower robot based on the cost function.

According to the above method, the residual term is determined based on the first position information and the second position information, and thus cost function is constructed based on the residual term, such that the current position information of the lawnmower robot is determined based on cost function. By optimizing with the constraints of the first and second position information, the current position information is determined with higher accuracy.

In some embodiments, a left wheel of the lawnmower robot is provided with a left wheel speedometer, and a right wheel of the lawnmower robot is provided with a right wheel speedometer;

wherein the determining the first position information of the lawnmower robot includes:
determining wheel speed information of the left wheel via the left wheel speedometer, wherein the wheel speed information of the left wheel is related to a linear velocity;
determining wheel speed information of the right wheel via the right wheel speedometer, wherein the wheel speed information of the right wheel is related to a linear velocity; and
performing dead reckoning on the wheel speed information of the left wheel and the wheel speed information of the right wheel to determine the first position information.

According to the above method, the wheel speed information of the left wheel is determined via the left wheel speedometer and the wheel speed information of the right wheel is determined via the right wheel speedometer, and thus dead reckoning is performed on the wheel speed information of the left and right wheels to determine the first position information, such that data preparation is provided for the fusion processing of the first and second position information.

In some embodiments, the determining the wheel speed information of a wheel via a wheel speedometer on the wheel includes:

acquiring a number of pulses output by the wheel speedometer within a sampling interval; and

determining the wheel speed information of the wheel based on the sampling interval, the number of pulses, and attribute information of the wheel.

In some embodiments, the performing dead reckoning on the wheel speed information of the left wheel and the wheel speed information of the right wheel to determine the first position information includes:

acquiring a heading angle of the lawnmower robot;
determining a travel distance of the left wheel based on the wheel speed information of the left wheel and the sampling interval;
determining a travel distance of the right wheel based on the wheel speed information of the right wheel and the sampling interval; and
determining the first position information based on the heading angle of the lawnmower robot, the travel distance of the left wheel, and the travel distance of the right wheel.

According to the above method, the travel distance of the left wheel and the travel distance of the right wheel are determined, such that data preparation is provided for determining the first position information.
Based on this, the first position information is determined based on the heading angle, the travel distance of the left wheel, and the travel distance of the right wheel of the lawnmower robot.
In a second aspect of the embodiments of the present disclosure, an apparatus for localizing a lawnmower robot is provided. The apparatus includes:

a first determining module, configured to determine first position information of the lawnmower robot, wherein the first position information is related to wheel speed data of the lawnmower robot;
a second determining module, configured to determine second position information of the lawnmower robot, wherein the second position information is related to at least one of satellite navigation data and inertial positioning data of the lawnmower robot; and
a fusing module, configured to fuse the first position information and the second position information to determine current position information of the lawnmower robot.

In a third aspect of the embodiments of the present disclosure, an electronic device is provided. The electronic device includes a memory and a processor. The memory stores a computer program; and the processor, when running the computer program, is caused to perform the method for localizing a lawnmower robot as described above.
In a fourth aspect of the embodiments of the present disclosure, a computer storage medium is provided. The computer storage medium stores at least one executable instruction. The at least one executable instruction, when executed by a processor, causes the processor to perform the method for localizing a lawnmower robot as described above.
The above description only summarizes the technical solutions according to the embodiments of the present disclosure. Specific embodiments of the present disclosure are described hereinafter to better and clearer understand the technical solutions of the embodiments of the present disclosure, to practice the technical solutions based on the disclosure of the specification and to make the above and other objectives, features and advantages of the embodiments of the present disclosure more apparent and understandable.

**BRIEF DESCRIPTION OF THE DRAWINGS**

FIG. 1 is a structural block diagram of a lawnmower robot according to some embodiments of the present disclosure.
FIG. 2 is a schematic flowchart of a method for localizing a lawnmower robot according to some embodiments of the present disclosure.
FIG. 3 is a schematic flowchart of a method for localizing a lawnmower robot according to some embodiments of the present disclosure.
FIG. 4 is a schematic flowchart of a method for localizing a lawnmower robot according to some embodiments of the present disclosure.
FIG. 5 is a schematic flowchart of a method for localizing a lawnmower robot according to some embodiments of the present disclosure.
FIG. 6 is a schematic flowchart of a method for localizing a lawnmower robot according to some embodiments of the present disclosure.
FIG. 7 is a schematic flowchart of a method for localizing a lawnmower robot according to some embodiments of the present disclosure.

FIG. 8 is a schematic structural diagram of an apparatus for localizing a lawnmower robot some embodiments of the present disclosure.

## DETAILED DESCRIPTION OF THE EMBODIMENTS

For clearer descriptions of the objectives, technical solutions, and advantages of the embodiments of the present disclosure, the following clearly and completely describes the technical solutions in the embodiments of the present disclosure with reference to the accompanying drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

Unless otherwise defined, all technical and scientific terms used herein have the same meaning as commonly understood by persons skilled in the art to which the subject matter of the present disclosure belongs. The terms used in the specification of the present disclosure are for the purpose of describing specific embodiments only and are not intended to limit the present disclosure. The terms "comprise" and "have," as well as any variations thereof, as used in the description, claims, and drawings of the present disclosure, are intended to indicate non-exclusive inclusion.

The terms "example" and "embodiment" in the present disclosure signify that the specific characteristic, structures or features described with reference to the embodiments may be covered in at least one embodiment of the present disclosure. The term "embodiment," when used in various positions of the description, neither indicates the same embodiment, nor indicates an independent or optional embodiment that is exclusive of the other embodiments. A person skilled in the art would implicitly or explicitly understand that the embodiments described in the present disclosure may be incorporated with other embodiments.

The term "and/or" in the present disclosure is merely an association relationship for describing associated objects, which represents that there may exist three types of relationships. For example, the phrase "A and/or B" may indicate (A), (B), or (A and B). In addition, the forward-slash symbol "/" generally represents an "or" relationship between associated objects before and after the symbol.

In addition, terms such as "first," "second," and the like in the specifications, claims and the accompanying drawings of the present disclosure are intended to distinguish different objects but are not intended to define a specific sequence. Such terms may explicitly or implicitly indicate one or more such features.

In the description of the present disclosure, the terms "a plurality of" and "at least two" signify two or more, unless otherwise specified. Likewise, the terms "a plurality of groups" and "at least two groups" signify two or more groups (including two groups).

The system architecture involved in the embodiments of the present disclosure is described below.

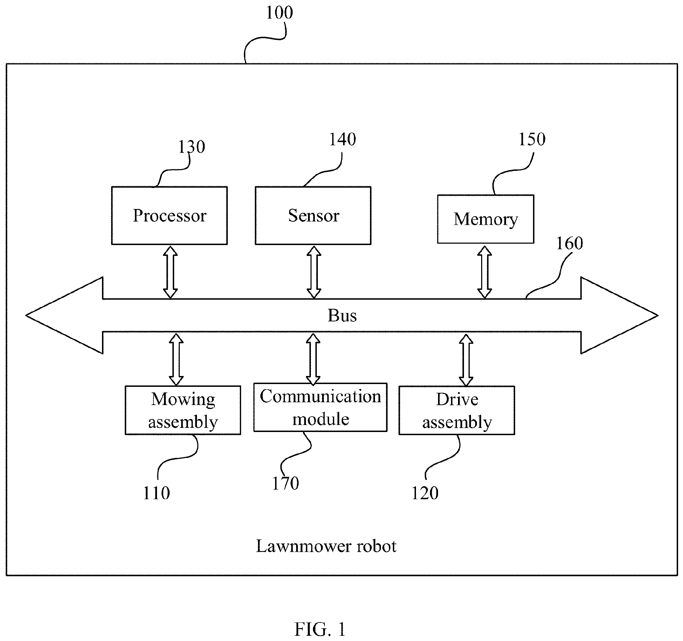

FIG. 1 is a structural block diagram of a lawnmower robot 100 according to some embodiments of the present disclosure. As illustrating in FIG. 1, the lawnmower robot 100 includes at least a mowing assembly 110, a drive assembly 120, a processor 130, a sensor 140, and a memory 150. The lawnmower robot 100 may further include a communication module 170 and a bus 160. The mowing assembly 110, the drive assembly 120, the processor 130, the sensor 140, the memory 150, and the communication module 170 may communicate with one another via the bus 160.

The mowing assembly 110 is configured to perform mowing operations. The mowing assembly 110 includes at least a blade disc and a blade disc drive structure.

The drive assembly 120 is configured to perform movement operations of the lawnmower robot 100. The drive assembly 120 includes at least wheels and a wheel drive structure. The wheels include a left wheel and a right wheel.

The sensor 140 may be configured to acquire wheel speed data, and may be further configured to acquire inertial positioning data.

The communication module 170 may be configured to acquire satellite navigation data, and may be further configured to communicate with external devices. The processor 130 is configured to execute logic instructions stored in the memory 150 to perform the method for localizing a lawnmower robot as described in the embodiments hereinafter.

The processor 130, the sensor 140, and the memory 150 may each include a single component or a plurality of integrated components, which is not limited in the embodiments of the present disclosure.

Furthermore, in a case where the logic instructions in the memory 150 are implemented in the form of software functional modules and are sold or used as an independent product, the logic instructions may be stored on a computer-readable storage medium.

Based on the foregoing description, the method for localizing a lawnmower robot provided in the embodiments of the present disclosure is performed by software modules and/or hardware modules of the lawnmower robot. For simplicity of description, the method for localizing a lawnmower robot according to the embodiments of the present disclosure is described in detail hereinafter with reference to the accompanying drawings, using the lawnmower robot as an example.

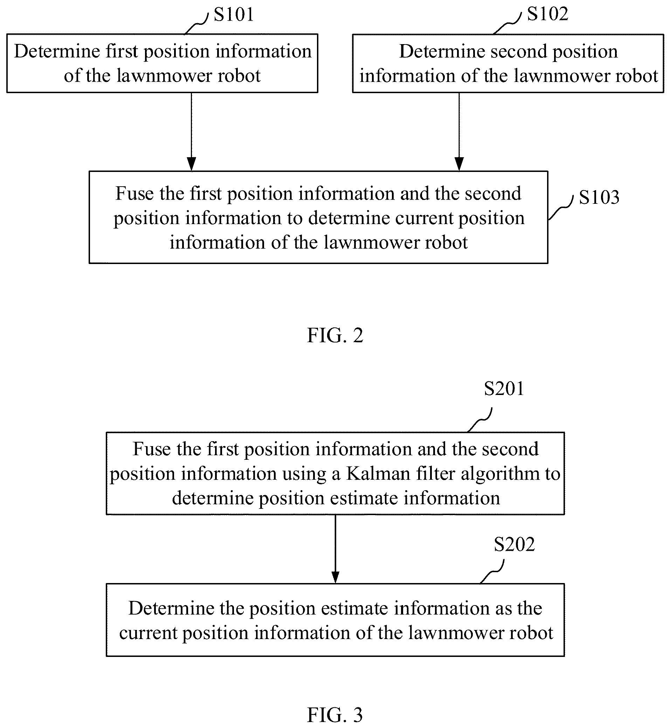

FIG. 2 is a schematic flowchart of a method for localizing a lawnmower robot according to some embodiments of the present disclosure. As illustrated in FIG. 2, the method includes the following steps.

In S101, first position information of the lawnmower robot is determined.

The first position information is related to wheel speed data of the lawnmower robot.

The wheel speed data of the lawnmower robot includes a linear velocity of the wheels of the lawnmower robot, an angular velocity of the wheels of the lawnmower robot, and a heading angle of the lawnmower robot.

The heading angle of the lawnmower robot refers to an angle of rotation of the lawnmower robot.

The lawnmower robot acquires the wheel speed data using wheel speedometers. The wheel speedometer may be a Hall-effect wheel speed sensor or a magneto-electric wheel speed sensor, which is not limited in the present disclosure.

In the embodiments of the present disclosure, the wheel speedometers include a left wheel speedometer and a right wheel speedometer. A left wheel of the lawnmower robot is provided with the left wheel speedometer, and a right wheel of the lawnmower robot is provided with the right wheel speedometer.

Consequently, the lawnmower robot determines the first position information based on the wheel speed data. The first position information includes a first coordinate of current position of the lawnmower robot.

The first coordinate is represented as (X1, Y1), wherein X1 is a distance from an origin, defined at an initial position, along an X-axis, and Y1 is a distance from the origin along a Y-axis.

Thus, the first position information of the lawnmower robot serves as a data preparation step for determining current position information of the lawnmower robot.

In S102, second position information of the lawnmower robot is determined.

The second position information is related to at least one of satellite navigation data and inertial positioning data of the lawnmower robot.

The lawnmower robot acquires the satellite navigation data via a global navigation satellite system (GNSS). The satellite navigation data includes longitude, latitude, altitude information, and position information of the lawnmower robot.

The lawnmower robot acquires the inertial positioning data via an inertial measurement unit (IMU). The inertial positioning data includes a linear acceleration measured by an accelerometer and an angular velocity measured by a gyroscope.

Consequently, the lawnmower robot may determine the second position information based on the satellite navigation data. Alternatively, the lawnmower robot may determine the second position information based on the inertial positioning data. Alternatively, the lawnmower robot may determine the second position information based on both the satellite navigation data and the inertial positioning data. The second position information includes a second coordinate of the current position of the lawnmower robot.

The second coordinate is represented as (X2, Y2, Z2), wherein X2 is a distance from the origin along the X-axis, Y2 is a distance from the origin along the Y-axis, and Z2 is a distance from the origin along a Z-axis.

Thus, the second position information of the lawnmower robot serves as another data preparation step for determining the current position information of the lawnmower robot.

It should be noted that there is no required temporal order for S101 and S102, and S101 and S102 may be performed concurrently or sequentially.

In S103, the first position information and the second position information are fused to determine the current position information of the lawnmower robot.

The lawnmower robot may perform a fusion process on the first position information and the second position information using various implementations, such as a Kalman filter algorithm or by minimizing a cost function.

The Kalman filter algorithm is an algorithm that uses a linear system state equation to provide an optimal estimate of a state of a system based on input and output observation data of the system. Based on this, the lawnmower robot may use the first position information and the second position information as inputs to a system corresponding to the Kalman filter algorithm to determine position estimate information. The position estimate information may be an optimized output value of the aforementioned system.

The cost function is an important parameter in machine learning, which is used for correctly evaluating a model. A machine learning model aims to minimize the cost function during an optimization process. Based on this, the lawnmower robot may determine a fitted value corresponding to the minimized cost function as the current position information of the lawnmower robot.

The current position information includes a third coordinate of the current position of the lawnmower robot. The third coordinate is represented as (X3, Y3), wherein X3 is a distance from the origin along the X-axis, and Y3 is a distance from the origin along the Y-axis.

In the method for localizing the lawnmower robot according to the present disclosure, by determining the first position information and the second position information, data sources from multiple dimensions are provided for determining the current position information of the lawnmower robot.

Based on this, fusing the first position information and the second position information allows for a tight coupling of the first position information and the second position information. This, in turn, makes the current position information of the lawnmower robot more accurate, thereby improving the localization accuracy of the lawnmower robot and ensuring that a high degree of localization accuracy is still maintained even in a case where satellite positioning signals are disturbed.

Based on the description of the above embodiment, a specific implementation of using the Kalman filter algorithm to fuse the first position information and the second position information in S103 is described in detail with reference to FIG. 3.

FIG. 3 is a schematic flowchart of a method for localizing a lawnmower robot according to some embodiments of the present disclosure. As illustrated in FIG. 3, the method for localizing a lawnmower robot according to the present disclosure may include the following steps.

In S201, the first position information and the second position information are fused by the Kalman filter algorithm to determine the position estimate information.

In S202, the position estimate information is determined as the current position information of the lawnmower robot.

The first position information serves as a state value $X_k$ in the Kalman filter algorithm, and the second position information serves as a measurement value $Z_k$ in the Kalman filter algorithm.

The lawnmower robot estimates the position estimate information based on the state value $X_k$ and the measurement value $Z_k$. Consequently, the lawnmower robot may use the position estimate information as the current position information of the lawnmower robot.

In summary, the first position information and the second position information are fused using the existing Kalman filter algorithm to determine the position estimate information, and then the position estimate information is determined as the current position information, such that the calculation of higher-precision position information is achieved at a lower cost.

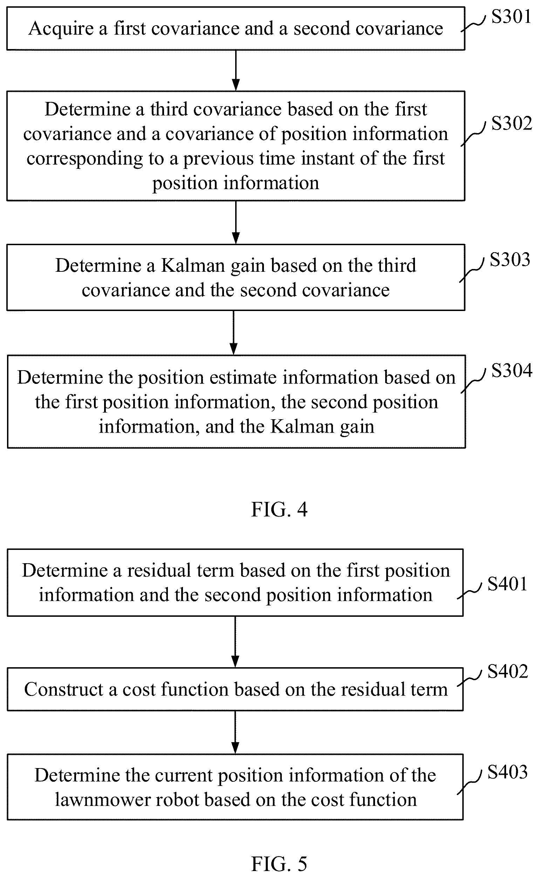

Exemplarily, FIG. 4 is a schematic flowchart of a method for localizing a lawnmower robot according to some embodiments of the present disclosure. Based on the above embodiments, S201 may include the following steps.

In S301, a first covariance and a second covariance are acquired.

The first covariance is related to the wheel speed data, and the second covariance is related to at least one of the satellite navigation data and the inertial positioning data.

In some examples, a covariance of noise in the wheel speed data is the first covariance, and a covariance of noise in at least one of the satellite navigation data and the inertial positioning data is the second covariance. Because the noise in the wheel speed data and the noise in at least one of the satellite navigation data and the inertial positioning data conform to a Gaussian distribution, in the Kalman filter algorithm, the first covariance and the second covariance do not change with the state of the system, that is, the first covariance and the second covariance are constant.

In S302, a third covariance is determined based on the first covariance and a covariance of position information corresponding to a previous time instant of the first position information.

The third covariance is a covariance of the first position information.

The lawnmower robot may determine the third covariance by substituting the first covariance and the covariance of position information corresponding to the previous time instant into Formula (1):

$$P_{\bar{k}} = AP_{k-1}A^T + Q \qquad \text{Formula (1)}$$

In Formula (1), $P_{\bar{k}}$ represents the third covariance, $A$ represents a state transition matrix, $A^T$ represents a transpose of $A$, $P_{k-1}$ represents the covariance of the position information corresponding to the previous time instant of the first position information, and $Q$ represents the first covariance.

In S303, a Kalman gain is determined based on the third covariance and the second covariance.

The lawnmower robot may determine the Kalman gain by substituting the third covariance and the second covariance into Formula (2):

$$Kg_k = \frac{P_{\bar{k}}H^T}{HP_{\bar{k}}H^T + R} \qquad \text{Formula (2)}$$

In Formula (2), $Kg_k$ represents the Kalman gain, $P_{\bar{k}}$ represents the third covariance, $H$ represents a conversion matrix from the state value to the measurement value, $H^T$ represents a transpose matrix of $H$, and $R$ represents the second covariance.

Both the third covariance and the Kalman gain are intermediate results of the Kalman filter algorithm.

In S304, the position estimate information is determined based on the first position information, the second position information, and the Kalman gain.

The lawnmower robot may determine the position estimate information by substituting the first position information, the second position information, and the Kalman gain into Formula (3):

$$\tilde{X}_k = X_k + Kg_k\left(Z_k - HX_k\right) \qquad \text{Formula (3)}$$

In Formula (3), $\tilde{X}_k$ represents the position estimate information, $X_k$ represents the first position information, $Kg_k$ represents the Kalman gain, $Z_k$ represents the second position information, and H represents the conversion matrix from the state value to the measurement value.

H represents the relationship that connects the state value to the measurement value. In the Kalman filter algorithm, H defines a linear relationship and is responsible for transforming an m-dimensional measurement value into an n-dimensional state space to conform to the mathematical form of the state variable, which is a prerequisite for the filtering process.

$\tilde{X}_k$ represents one of the results of the Kalman filter algorithm, which is the updated result, also known as the optimal estimate.

In summary, the first covariance and the second covariance are acquired, and the third covariance is determined based on the first covariance and the covariance of the position information corresponding to the previous time instant of the first position information, such that the Kalman gain is determined based on the third covariance and the second covariance. According to the embodiments of the present disclosure, the Kalman filter algorithm is simplified, such that the position estimation information is determined based on first position information, the second position information, and the Kalman gain, thereby improving the computational efficiency of the fusion.

Based on the description of the embodiments illustrated in FIG. 4, upon determining the third covariance and the Kalman gain, the lawnmower robot may store the covariance of the position information corresponding to the subsequent time instant of the first position information, which serves as a basis for the next iteration.

Exemplarily, the lawnmower robot determines a fourth covariance based on the third covariance and the Kalman gain, wherein the fourth covariance is a covariance of position information corresponding to a subsequent time instant of the first position information.

In some examples, the lawnmower robot may determine the fourth covariance by substituting the third covariance and the Kalman gain into Formula (4):

$$P_k = \left(I - Kg_k H\right)P_{\bar{k}} \qquad \text{Formula (4)}$$

In Formula (4), $P_k$ represents the fourth covariance, $I$ represents an identity matrix, $Kg_k$ represents the Kalman gain, $H$ represents the conversion matrix from the state value to the measurement value, and $P_{\bar{k}}$ represents the third covariance.

The fourth covariance is a covariance corresponding to the position estimate information. The fourth covariance represents the uncertainty of the system state and is one of the results of the Kalman filter algorithm. Consequently, the lawnmower robot may store the fourth covariance.

Thus, in a case where the system corresponding to the Kalman filter algorithm proceeds to a next time instant, the fourth covariance becomes the covariance of the position information corresponding to the previous time instant of the first position information, **i.e., the covariance** in Formula (1). Consequently, the Kalman filter algorithm operates recursively to determine the current position information of the lawnmower robot in real-time.

For example, assume the first position information of the lawnmower robot at time instants $t_1$, $t_2$, and $t_3$ is $X_1$, $X_2$, and $X_3$, respectively, and the second position information is $Z_1$, $Z_2$, and $Z_3$, respectively. The current position information of the lawnmower corresponding to time instants $t_1$, $t_2$, and $t_3$ is represented by $\tilde{X}_1$, $\tilde{X}_2$, and $\tilde{X}_3$, respectively.

At time instant $t_1$, based on the fourth covariance stored at time instant $t_0$, $P_0$ is known to be the covariance corresponding to $X_1$. Then, using $X_1$, $Z_1$, and $P_0$ with Formulas (1) to (4), the current position information and its corresponding covariance $P_1$ (the fourth covariance at $t_1$) are obtained.

At time instant $t_2$, based on the fourth covariance stored at time instant $t_1$, $P_1$ is known to be the covariance corresponding to $X_2$. Then, using $X_2$, $Z_2$, and $P_1$ with Formulas (1) to (4), the current position information and the corresponding covariance $P_2$ (the fourth covariance at time instant $t_2$) are obtained.

At time instant t3, based on the fourth covariance stored at time instant $t_2$, $P_2$ is known to be the covariance corresponding to $X_3$. Then, using $X_3$, $Z_3$, and $P_2$ with Formulas (1) to (4), the current position information and the corresponding covariance $P_3$ (the fourth covariance at time instant $t_3$) are obtained.

**In** summary, the fourth covariance is determined based on the third covariance and the Kalman gain, wherein the fourth covariance is a covariance of position information corresponding to a subsequent time instant of the first positioning information; and the fourth covariance is stored. Consequently, the Kalman filter algorithm operates recursively to determine the current position information of the lawnmower robot in real-time.

Based on the description of the above embodiments, a specific implementation of using a cost function minimization approach to fuse the first position information and the second position information in S103 is described in detail with reference to FIG. 5.

Reference is now made to FIG. 5, which is a schematic flowchart of a method for localizing a lawnmower robot according to some embodiments of the present disclosure. As illustrated in FIG. 5, the method for localizing a lawnmower robot according to the present disclosure may include the following steps.

In S401, a residual term is determined based on the first position information and the second position information.

A residual, in mathematical statistics, refers to the difference between an actual observed value and a fitted value.

The lawnmower robot determines a first difference between the fitted value and the first position information, and a second difference between the fitted value and the second position information. Consequently, the lawnmower robot may determine the sum of the first difference and the second difference as the residual term.

In some examples, the lawnmower robot may determine the residual term by substituting the first position information and the second position information into Formula (5):

$$e_g^{j,t} = \left(z^j - x\right) + \left(h^t - x\right) \qquad \text{Formula (5)}$$

In Formula (5), $e_g^{j,t}$ represents the residual term, $z^j$ represents the first position information corresponding to a $j^{th}$ frame of wheel speed data, $h^t$ represents the second position information corresponding to a $t^{th}$ frame of at least one of satellite navigation data and inertial positioning data, and x is the fitted value.

In S402, the cost function is constructed based on the residual term.

The lawnmower robot may construct the cost function by substituting the residual term into Formula (6):

$$c(x) = \sum_{t=0}^{T-1} \sum_{j=0}^{K-1} \left\| e_g^{j,t} \right\|_{w_g^t} + e_m e_m^T \qquad \text{Formula (6)}$$

In Formula (6), c(x) represents the cost function, $T$ represents a total number of frames of the wheel speed data, $K$ represents a total number of frames of at least one of the satellite navigation data and the inertial positioning data, $e_g^{j,t}$ represents the residual term, $e_m$ represents a marginalized residual term, $e_m^T$ represents a transpose matrix of $e_m$, and $w_g^t$ represents a weight for the residual term used during the optimization process.

In S403, the current position information of the lawnmower robot is determined based on the cost function.

The lawnmower robot determines a minimum value of the cost function; that is, minimizing the cost function. Consequently, the lawnmower robot determines a fitted value corresponding to the minimized cost function as the current position information of the lawnmower robot.

In summary, the residual term is determined based on the first position information and the second position information, and thus cost function is constructed based on the residual term, such that the current position information of the lawnmower robot is determined based on cost function. By optimizing with the constraints of the first position information and the second position information, the current position information is determined with higher accuracy.

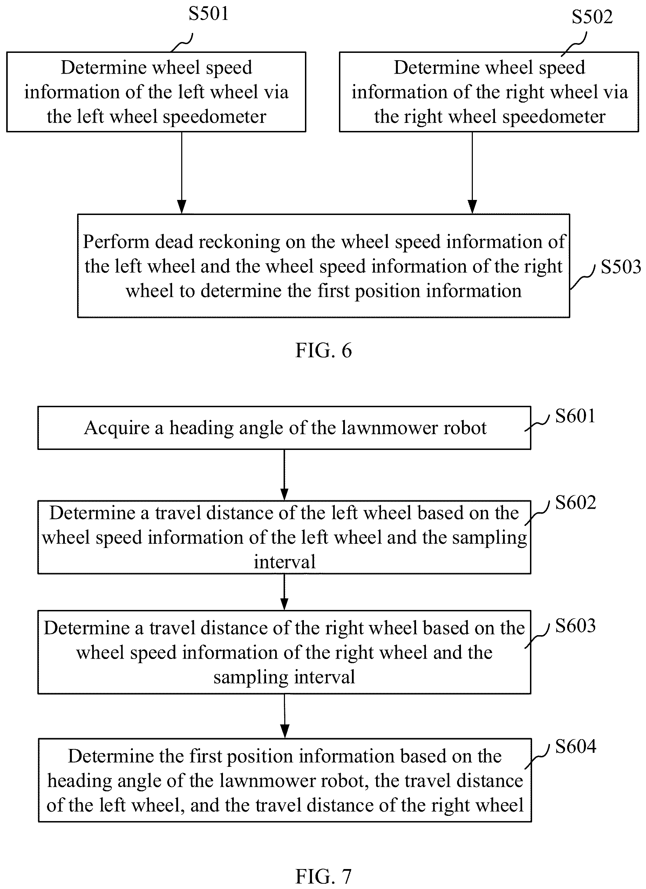

Based on the description of the above embodiment, reference is now is made to FIG. 6, which is a schematic flowchart of a method for localizing a lawnmower robot according to some embodiments of the present disclosure. Based on the above embodiment, S101 may include the following steps.

In S501, wheel speed information of the left wheel is determined via the left wheel speedometer.

The wheel speed information of the left wheel is related to a linear velocity.

In S502, wheel speed information of the right wheel is determined via the right wheel speedometer.

The wheel speed information of the right wheel is related to a linear velocity.

Exemplarily, the lawnmower robot may determine the wheel speed information of a wheel via the wheel speedometer arranged thereon. In some examples, the lawnmower robot may acquire a number of pulses output by the wheel speedometer within a sampling interval. Consequently, the lawnmower robot may determine the wheel speed information of the wheel based on the sampling interval, the number of pulses, and attribute information of the wheel.

The attribute information of the wheel includes a wheel diameter, a number of encoder lines, and a distance between the left and right wheels.

The number of pulses includes a number of pulses from the left wheel speedometer and a number of pulses from the right wheel speedometer.

The wheel speed information includes the wheel speed information of the left wheel and the wheel speed information of the right wheel.

The lawnmower robot may determine the wheel speed information by substituting the sampling interval, the number of pulses, and the wheel attribute information into Formula (7):

$$v_l = \frac{N_l}{P} \times \frac{\pi \cdot D}{\Delta t}$$

$$v_r = \frac{N_r}{P} \times \frac{\pi \cdot D}{\Delta t} \qquad \text{Formula (7)}$$

In Formula (7), $\Delta t$ represents the sampling interval, $N_l$ represents the number of pulses from the left wheel speedometer, $N_r$ represents the number of pulses from the right wheel speedometer, $D$ represents the wheel diameter, $P$ represents the number of encoder lines, $v_l$ represents the wheel speed information of the left wheel, and $v_r$ represents the wheel speed information of the right wheel.

It should be noted that there is no required temporal order for S501 and S502, and S501 and S502 may be performed concurrently or sequentially.

In S503, dead reckoning is performed on the wheel speed information of the left wheel and the wheel speed information of the right wheel to determine the first position information.

The lawnmower robot determines a travel distance of the left wheel and a travel distance of the right wheel based on their respective wheel speed information, and thus determines the first position information based on the travel distance of the left wheel and the travel distance of the right wheel.

The pose of the lawnmower robot is represented by a vector. $(x_0, y_0, \theta_0)^T$ represents a pose of the lawnmower robot corresponding to a previous time instant, and $(x_1, y_1, \theta_1)^T$ represents a pose of the lawnmower robot corresponding to a current time instant.

$(x_0, y_0)$ represents first position information of the lawnmower robot at the previous time instant, $(x_1, y_1)$ represents first position information of the lawnmower robot corresponding to the current time instant, $\theta_0$ represents a heading angle of the lawnmower robot corresponding to the previous time instant, and $\theta_1$ represents a heading angle the lawnmower robot corresponding to the current time instant.

In some examples, the lawnmower robot may determine the first position information by substituting the wheel speed information of the left wheel and the right wheel into Formula (8):

$$\begin{bmatrix} x_1 \\ y_1 \\ \theta_1 \end{bmatrix} = \begin{bmatrix} x_0 \\ y_0 \\ \theta_0 \end{bmatrix} + \begin{bmatrix} -\Delta s * \sin\left(\theta_0 + \frac{\Delta\theta}{2}\right) \\ \Delta s * \cos\left(\theta_0 + \frac{\Delta\theta}{2}\right) \\ \Delta\theta \end{bmatrix} \qquad \text{Formula (8)}$$

In Formula (8), $\Delta s = \dfrac{\Delta s_r + \Delta s_l}{2}$, $\Delta\theta = \dfrac{\Delta s_r - \Delta s_l}{B}$.

In Formula (8), $\Delta s_r$ represents the travel distance of the right wheel, $\Delta s_l$ represents the travel distance of the left wheel, B represents the distance between the left and right wheels, and $\Delta\theta$ represents a change in the heading angle within the sampling interval.

In summary, the wheel speed information of the left wheel is determined via the left wheel speedometer and the wheel speed information of the right wheel is determined via the right wheel speedometer, and thus dead reckoning is performed on the wheel speed information of the left and right wheels to determine the first position information, such that data preparation is provided for the fusion processing of the first and second position information.

Reference is now made to FIG. 7, which is a schematic flowchart of a method for localizing a lawnmower robot according to some embodiments of the present disclosure. Based on the above embodiment, S503 may include the following steps.

In S601, the heading angle of the lawnmower robot is acquired.

The lawnmower robot acquires the heading angle via the wheel speedometer sensor. Alternatively, the lawnmower robot may also calculate the heading angle based on the travel distance of the left wheel, the travel distance of the right wheel, and the distance between the left and right wheels. Alternatively, the lawnmower robot may obtain the heading angle by either of the above two methods, which is not limited in the present disclosure.

In S602, the travel distance of the left wheel is determined based on the wheel speed information of the left wheel and a sampling interval.

The lawnmower robot may calculate the travel distance of the left wheel as a product of the wheel speed information of the left wheel and the sampling interval.

In S603, the travel distance of the right wheel is determined based on the wheel speed information of the right wheel and the sampling interval.

The lawnmower robot may calculate the travel distance of the right wheel as a product of the wheel speed information of the right wheel and the sampling interval.

It should be noted that there is no required temporal order for S601 to S603, and S601 to S603 may be performed concurrently or sequentially. For ease of illustration, S601 to S603 are illustrated as being performed sequentially in FIG. 7.

In S604, the first position information is determined based on the heading angle of the lawnmower robot, the travel distance of the left wheel, and the travel distance of the right wheel.

The lawnmower robot may determine the first position information by substituting the heading angle of the lawnmower robot, the travel distance of the left wheel, and the travel distance of the right wheel into Formula (8).

In summary, the travel distances of the left and right wheels serve as data preparation for determining the first position information. Based on this, the lawnmower robot calculates the first position information from the heading angle and the travel distances of its left and right wheels.

Although the various steps in the above embodiments are described in the aforementioned sequence, a person skilled in the art may understand that, to achieve the effects of the embodiments, the different steps do not need to be performed in such a sequence. These steps may be performed concurrently (in parallel) or in a reversed order, and such simple variations fall within the scope of protection of the present disclosure.

According to the embodiments of the present disclosure, the lawnmower robot may be organized into functional modules according to the method examples as described above. For example, various functional modules may be defined corresponding to various functions, or two or more functions may be integrated into a single processing unit. The integrated unit may be implemented in the form of hardware, or in the form of a software functional module.

The organization of the functional modules according to the embodiments of the present disclosure is exemplary and is merely a logical functional organization; and other organizations may be used in actual implementation.

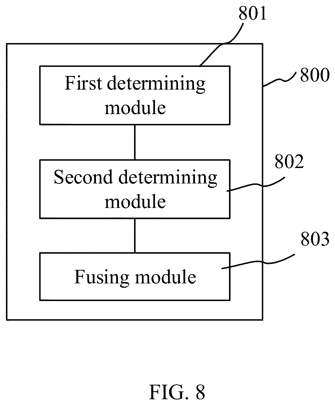

Reference is now made to FIG. 8, which is a schematic structural diagram of an apparatus 800 for localizing a lawnmower robot according to some embodiments of the present disclosure. The apparatus 800 include:

> a first determining module 801, configured to determine first position information of the lawnmower robot, wherein the first position information is related to wheel speed data of the lawnmower robot;
> a second determining module 802, configured to determine second position information of the lawnmower robot, wherein the second position information is related to at least one of satellite navigation data and inertial positioning data of the lawnmower robot; and
> a fusing module 803, configured to fuse the first position information and the second position information to determine current position information of the lawnmower robot.

According to the embodiments, by determining the first position information and the second position information, data sources from multiple dimensions are provided for determining the current position information of the lawnmower robot. Based on this, fusing the first position information and the second position information allows for a tight coupling of the first position information and the second position information. This, in turn, makes the current position information of the lawnmower robot more accurate, thereby improving the localization accuracy of the lawnmower robot and ensuring that a high degree of localization accuracy is still maintained even in a case where satellite positioning signals are disturbed.

In some embodiments, the fusing module 803 is specifically configured to: fuse the first position information and the second position information using a Kalman filter algorithm to determine position estimate information; and determine the position estimate information as the current position information of the lawnmower robot.

In some embodiments, the fusing module 803 is specifically configured to: acquire a first covariance and a second covariance, wherein the first covariance is related to the wheel speed data, and the second covariance is related to at least one of the satellite navigation data and the inertial positioning data; determine a third covariance based on the first covariance and a covariance of position information corresponding to a previous time instant of the first position information, wherein the third covariance is a covariance of the first position information; determine a Kalman gain based on the third covariance and the second covariance; and determine the position estimate information based on the first position information, the second position information, and the Kalman gain.

In some embodiments, the apparatus 800 further includes a third determining module 804, configured to determine a fourth covariance based on the third covariance and the Kalman gain, wherein the fourth covariance is a covariance of position information corresponding to a subsequent time instant of the first position information; and store the fourth covariance.

In some embodiments, the fusing module 803 is specifically configured to: determine a residual term based on the first position information and the second position information; construct a cost function based on the residual term; and determine the current position information of the lawnmower robot based on the cost function.

In some embodiments, the first determining module 801 is specifically configured to: determine wheel speed information of a left wheel via a left wheel speedometer, wherein the wheel speed information of the left wheel is related to a linear velocity; determine wheel speed information of a right wheel via a right wheel speedometer, wherein the wheel speed information of the right wheel is related to a linear velocity; and perform dead reckoning on the wheel speed information of the left wheel and the wheel speed information of the right wheel to determine the first position information.

In some embodiments, the first determining module 801 is specifically configured to: acquire a number of pulses output by a wheel speedometer within a sampling interval; and determine wheel speed information of a wheel based on the sampling interval, the number of pulses, and attribute information of the wheel.

In some embodiments, the first determining module 801 is specifically configured to: acquire a heading angle of the lawnmower robot; determine a travel distance of the left wheel based on the wheel speed information of the left wheel and a sampling interval; determine a travel distance of the right wheel based on the wheel speed information of the right wheel and the sampling interval; and determine the first position information based on the heading angle of the lawnmower robot, the travel distance of the left wheel, and the travel distance of the right wheel.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid-state drive (SSD)), or the like.

Exemplarily, the present disclosure further provides an electronic device. The electronic device includes a memory and a processor, wherein the memory stores a computer program, and the processor, when executing the computer program, is caused to perform the method for localizing a lawnmower robot as described above.

A person of ordinary skill in the art understands that, in order to implement the aforementioned various functions, the electronic device includes corresponding at least one of hardware and software modules that execute each function. In combination with the algorithm and steps described in the embodiments disclosed in this specification, the algorithm and the steps may be implemented by electronic hardware or a combination of computer software and electronic hardware. Whether these functions are performed by hardware or software depends on a specific application and an implementation constraint of the technical solution. A person skilled in the art may use different methods to implement the described functions for each particular application, but it should not be considered that the implementation goes beyond the scope of this application.

The electronic device provided by the embodiments of the present disclosure is configured to execute the aforementioned method for localizing the lawnmower robot, thereby achieving the same effects as the aforementioned implementation method.

Exemplarily, the present disclosure further provides a computer storage medium. The computer storage medium stores one or more executable instructions thereon, wherein the executable instructions, when executed by a processor, implements the method for localizing the lawnmower robot as described above.

Exemplarily, the present disclosure further provides a computer program product. The computer program product includes one or more executable instructions, wherein the one or more executable instructions are stored in a readable storage medium. At least one processor of an electronic device is capable of reading the one or more executable instructions from the readable storage medium. The one or more executable instructions, when executed by the at least one processor, cause the electronic device to perform the method for localizing the lawnmower robot as described above embodiments of the present disclosure.

Each of the electronic device, the computer-readable medium and the computer program product provided by the embodiments of the present disclosure is configured to execute the aforementioned method for localizing the lawnmower robot, and achieves beneficial effects, which may be referenced from the beneficial effects described in the corresponding method provided above, which are not described herein any further.

A person of ordinary skill in the art may understand that all or some of the processes of the methods in the embodiments may be implemented by a computer program instructing relevant hardware. The program may be stored in a non-volatile computer readable storage medium. When the program runs, the processes of the methods in the embodiments are performed. Herein, any reference to a memory, database, or other medium in the embodiments of the present disclosure may include at least one of non-volatile memory and volatile memory. The non-volatile memory includes a read-only memory (ROM), a magnetic tape, a floppy disk, a flash memory, an optical memory, a high-density embedded non-volatile memory, a magnetoresistive random access memory (MRAM), a ferroelectric random access memory (FRAM), a phase change memory (PCM), and a graphene memory, or the like. The volatile memory may include a random access memory (RAM), an external cache memory, or the like. **By way of illustration and not limitation,** the **RAM may be implemented in various forms,** for example, a static random access memory (SRAM) or a dynamic random access memory (DRAM) , or the like. Databases involved in the embodiments provided in the present disclosure may include at least one of a relational database and a non-relational database. The non-relational database may include blockchain-based distributed databases, and the like. The processors involved in the embodiments provided by the present disclosure may include, but are not limited to, general-purpose processors, central processing units (CPUs), graphics processing units (GPUs), digital signal processors (DSPs), programmable logic devices (PLDs), data processing logic devices based on quantum computing, and the like.

The technical features of the above embodiments may be combined in any manner. For conciseness of description, not all possible combinations of the technical features in the aforementioned embodiments have been described. However, any combination of these technical features shall be considered as falling within the scope of the present disclosure, provided that no contradiction arises from such combination.

The above embodiments are used only for illustrating the present disclosure, but are not intended to limit the protection scope of the present disclosure. Various modifications and replacements readily obtained by those skilled in the art within technical disclosure of the present disclosure shall fall within the protection scope of the present disclosure. Therefore, the protection scope of the present invention is subject to the claims.

**Claims**

1. A method for localizing a lawnmower robot, comprising:

   determining first position information of the lawnmower robot, wherein the first position information is related to wheel speed data of the lawnmower robot;
   determining second position information of the lawnmower robot, wherein the second position information is related to at least one of satellite navigation data and inertial positioning data of the lawnmower robot; and
   fusing the first position information and the second position information to determine current position information of the lawnmower robot.

2. The method according to claim 1, wherein the fusing the first position information and the second position information to determine the current position information of the lawnmower robot comprises:

   fusing the first position information and the second position information using a Kalman filter algorithm to determine position estimate information; and
   determining the position estimate information as the current position information of the lawnmower robot.

3. The method according to claim 2, wherein the fusing the first position information and the second position information by the Kalman filter algorithm to determine the position estimate information comprises:

   acquiring a first covariance and a second covariance, wherein the first covariance is related to the wheel speed data, and the second covariance is related to at least one of the satellite navigation data and the inertial positioning data;
   determining a third covariance based on the first covariance and a covariance of position information corresponding to a previous time instant of the first position information, wherein the third covariance is a covariance of the first position information;
   determining a Kalman gain based on the third covariance and the second covariance; and
   determining the position estimate information based on the first position information, the second position information, and the Kalman gain.

4. The method according to claim 3, further comprising:

   determining a fourth covariance based on the third covariance and the Kalman gain, wherein the fourth covariance is a covariance of position information corresponding to a subsequent time instant of the first positioning information; and
   storing the fourth covariance.

5. The method according to claim 1, wherein the fusing the first position information and the second position information to determine the current position information of the lawnmower robot comprises:

   determining a residual term based on the first position information and the second position information;
   constructing a cost function based on the residual term; and
   determining the current position information of the lawnmower robot based on the cost function.

6. The method according to any one of claims 1 to 5, wherein a left wheel of the lawnmower robot is provided with a left wheel speedometer, and a right wheel of the lawnmower robot is provided with a right wheel speedometer; wherein the determining the first position information of the lawnmower robot comprises:

   determining wheel speed information of the left wheel via the left wheel speedometer, wherein the wheel speed information of the left wheel is related to a linear velocity;
   determining wheel speed information of the right wheel via the right wheel speedometer, wherein the wheel speed information of the right wheel is related to a linear velocity; and
   performing dead reckoning on the wheel speed information of the left wheel and the wheel speed information of the right wheel to determine the first position information.

7. The method according to claim 6, wherein the determining the wheel speed information of a wheel via a wheel speedometer on the wheel comprises:

   acquiring a number of pulses output by the wheel speedometer within a sampling interval; and
   determining the wheel speed information of the wheel based on the sampling interval, the number of pulses, and attribute information of the wheel.

8. The method according to claim 7, wherein the performing the dead reckoning on the wheel speed information of the left wheel and the wheel speed information of the right wheel to determine the first position information comprises:

   acquiring a heading angle of the lawnmower robot;
   determining a travel distance of the left wheel based on the wheel speed information of the left wheel and the sampling interval;
   determining a travel distance of the right wheel based on the wheel speed information of the right wheel and the sampling interval; and
   determining the first position information based on the heading angle of the lawnmower robot, the travel distance of the left wheel, and the travel distance of the right wheel.

9. An electronic device, comprising a memory and a processor, wherein the memory stores a computer program, and the processor, when running the computer program, is caused to perform the method for localizing a lawnmower robot as defined in any one of claims 1 to 8.

10. A computer-readable storage medium, storing a computer program thereon, wherein the computer program, when executed by a processor, causes the processor to perform the method for localizing a lawnmower robot as defined in any one of claims 1 to 8.

FIG. 1

S101

Determine first position information
of the lawnmower robot

S102

Determine second position
information of the lawnmower robot

Fuse the first position information and the second
position information to determine current position
information of the lawnmower robot

S103

FIG. 2

S201

Fuse the first position information and the second
position information using a Kalman filter algorithm to
determine position estimate information

S202

Determine the position estimate information as the
current position information of the lawnmower robot

FIG. 3

Acquire a first covariance and a second covariance — S301

Determine a third covariance based on the first covariance and a covariance of position information corresponding to a previous time instant of the first position information — S302

Determine a Kalman gain based on the third covariance and the second covariance — S303

Determine the position estimate information based on the first position information, the second position information, and the Kalman gain — S304

FIG. 4

Determine a residual term based on the first position information and the second position information — S401

Construct a cost function based on the residual term — S402

Determine the current position information of the lawnmower robot based on the cost function — S403

FIG. 5

S501

S502

| Determine wheel speed information of the left wheel via the left wheel speedometer | Determine wheel speed information of the right wheel via the right wheel speedometer |

Perform dead reckoning on the wheel speed information of the left wheel and the wheel speed information of the right wheel to determine the first position information — S503

FIG. 6

Acquire a heading angle of the lawnmower robot — S601

Determine a travel distance of the left wheel based on the wheel speed information of the left wheel and the sampling interval — S602

Determine a travel distance of the right wheel based on the wheel speed information of the right wheel and the sampling interval — S603

Determine the first position information based on the heading angle of the lawnmower robot, the travel distance of the left wheel, and the travel distance of the right wheel — S604

FIG. 7

801

First determining
module

800

Second determining
module

802

Fusing module

803

FIG. 8

# INTERNATIONAL SEARCH REPORT

| International application No. |
|---|
| **PCT/CN2024/096593** |

## A. CLASSIFICATION OF SUBJECT MATTER

G01S 19/49(2010.01)i; G01C 21/16(2006.01)i

According to International Patent Classification (IPC) or to both national classification and IPC

## B. FIELDS SEARCHED

Minimum documentation searched (classification system followed by classification symbols)

IPC: G01S, G01C

Documentation searched other than minimum documentation to the extent that such documents are included in the fields searched

Electronic data base consulted during the international search (name of data base and, where practicable, search terms used)

CNTXT, ENTXTC: 割草机, RTK, 实时差分定位, real?time kinematic, 轮速, 转速, 融合, 惯性定位, 卡尔曼滤波, 卡尔曼增益, 残差, residual, 协方差, 成本函数, cost function

## C. DOCUMENTS CONSIDERED TO BE RELEVANT

| Category* | Citation of document, with indication, where appropriate, of the relevant passages | Relevant to claim No. |
|---|---|---|
| PX | CN 116679336 A (YOSEMITE SHANGHAI ROBOTICS CO., LTD) 01 September 2023 (2023-09-01)<br>claims 1-10 | 1-10 |
| Y | CN 112050809 A (JILIN UNIVERSITY) 08 December 2020 (2020-12-08)<br>description, paragraphs [0008]-[0058], and figures 1-8 | 1-10 |
| Y | CN 115220076 A (SONGLING ROBOT (SHENZHEN) CO., LTD.) 21 October 2022 (2022-10-21)<br>description, paragraph [0016] | 1-10 |
| Y | CN 115453599 A (YANCHENG POWER SUPPLY BRANCH, STATE GRID JIANGSU ELECTRIC POWER CO., LTD.) 09 December 2022 (2022-12-09)<br>description, paragraphs [0110]-[0188], and figures 1-5 | 1-10 |
| A | CN 107943049 A (JIANGXI HONGDU AVIATION INDUSTRY GROUP CO., LTD.) 20 April 2018 (2018-04-20)<br>entire document | 1-10 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 August 2024** | **21 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 733 813 A1**

## INTERNATIONAL SEARCH REPORT

International application No.

**PCT/CN2024/096593**

| C. | DOCUMENTS CONSIDERED TO BE RELEVANT | |
|---|---|---|
| Category* | Citation of document, with indication, where appropriate, of the relevant passages | Relevant to claim No. |
| A | CN 113252033 A (CHANGSHA HAIGE BEIDOU INFORMATION TECHNOLOGY CO., LTD.) 13 August 2021 (2021-08-13) entire document | 1-10 |
| A | KR 20170024329 A (HYUNDAI MOBIS CO., LTD.) 07 March 2017 (2017-03-07) entire document | 1-10 |

Form PCT/ISA/210 (second sheet) (July 2022)

**INTERNATIONAL SEARCH REPORT**
Information on patent family members

| | International application No. |
|---|---|
| | **PCT/CN2024/096593** |

| Patent document cited in search report | | | Publication date (day/month/year) | Patent family member(s) | | | Publication date (day/month/year) |
|---|---|---|---|---|---|---|---|
| CN | 116679336 | A | 01 September 2023 | None | | | |
| CN | 112050809 | A | 08 December 2020 | None | | | |
| CN | 115220076 | A | 21 October 2022 | None | | | |
| CN | 115453599 | A | 09 December 2022 | None | | | |
| CN | 107943049 | A | 20 April 2018 | WO | 2019113877 | A1 | 20 June 2019 |
| CN | 113252033 | A | 13 August 2021 | None | | | |
| KR | 20170024329 | A | 07 March 2017 | KR | 102400071 | B1 | 19 May 2022 |
| | | | | KR | 102400071 | B9 | 11 May 2023 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023106546032